# EUROPEAN PATENT APPLICATION

(11) **EP 4 640 503 A1**
(43) Date of publication of application: **29.10.2025**
(21) Application number: 25164084.3
(22) Date of filing: 17.03.2025
(51) Int. Cl.: B60T 5/00, B60C 23/18, B60B 25/00

(54) **WHEEL HEAT SHIELDS AND TECHNIQUES FOR FORMING WHEEL HEAT SHIELDS**

(30) Priority: 10.04.2024 US 202418631571
(71) Applicant: Honeywell International Inc., Charlotte, NC 28202 (US)
(72) Inventor: PEREYRA CARBALLAL, Lili Jazmin, Charlotte, 28202 (US); PARSONS, Abigail, Charlotte, 28202 (US); AUEL, Todd R., Charlotte, 28202 (US); SUN, Lijian, Charlotte, 28202 (US); BEEHLER, Johnathan T., Charlotte, 28202 (US); GONZALEZ-LANZ, Ricardo, Charlotte, 28202 (US)
(74) Representative: Haseltine Lake Kempner LLP

(57) **Abstract**

A wheel heat shield may include at least one segment including a heat-resistant material extending along a longitudinal axis between an outboard end and an inboard end. The at least one segment may define a radially inner surface and a radially outer surface relative to the longitudinal axis. At least the radially outer surface of the at least one segment may define a plurality of ribs configured to resist heat transfer across the at least one segment. An assembly may include a wheel and the wheel heat shield secured to an interior surface of the wheel. A technique may include additively depositing the heat-resistant material to form the wheel heat shield.

## Description

### TECHNICAL FIELD

The present disclosure relates to wheel heat shields.

### BACKGROUND

Vehicles, such as aircrafts, may use a wheel brake system that includes a multi-disc brake assembly. For example, the multi-disc brake assembly may include a plurality of rotors engaged with a wheel and a plurality of stators interleaved with the rotors. The rotors and wheel are configured to rotate around an axle, while the stators remain rotationally stationary. To decelerate rotational motion of a rotating wheel, the brake assembly may displace pistons against a pressure plate to squeeze the rotating rotors attached to the wheel against the stationary stators, therefore producing torque that decelerates the rotational motion of the wheel. This process generates heat within the rotors and the stators.

Wheel assemblies in transportation may be exposed to heat. For example, braking assemblies may generate heat in course of operation, for example, arising from friction. Further, brakes may remain at elevated temperatures and require significant time to cool after landing. Such heat may be transferred to wheels, which may further increase wheel temperature.

### SUMMARY

In general, the disclosure describes wheel heat shields, assemblies including wheel heat shields, and techniques for forming wheel heat shields. Wheel heat shields are configured to resist heat transfer toward a wheel, for example, from a brake assembly. Thus, wheel heat shields may prevent or reduce heating to wheels or tires to temperatures that could compromise their structural integrity or performance. In some examples, wheel heat shields according to the present disclosure may be fabricated by additive manufacturing.

In some examples, an example wheel heat shield includes at least one segment including a heat-resistant material extending along a longitudinal axis between an outboard end and an inboard end. The at least one segment defines a radially inner surface and a radially outer surface relative to the longitudinal axis. At least the radially outer surface of the at least one segment defines a plurality of ribs configured to resist heat transfer across the at least one segment.

In some examples, an example assembly includes a wheel and a wheel heat shield. The wheel defines an interior surface and an exterior rim configured to receive a tire. The wheel heat shield is secured to the interior surface. The wheel heat shield includes at least one segment including a heat-resistant material extending along a longitudinal axis between an outboard end and an inboard end. The at least one segment defines a radially inner surface and a radially outer surface relative to the longitudinal axis. At least the radially outer surface of the at least one segment defines a plurality of ribs configured to resist heat transfer across the at least one segment.

In some examples, an example technique includes additively depositing a heat-resistant material to form a wheel heat shield. The wheel heat shield includes at least one segment including the heat-resistant material extending along a longitudinal axis between an outboard end and an inboard end. The at least one segment defines a radially inner surface and a radially outer surface relative to the longitudinal axis. At least the radially outer surface of the at least one segment defines a plurality of ribs configured to resist heat transfer across the at least one segment.

The details of one or more examples are set forth in the accompanying drawings and the description below. Other features, objects, and advantages will be apparent from the description and drawings, and from the claims.

### BRIEF DESCRIPTION OF THE FIGURES

The details of one or more examples are set forth in the accompanying drawings and the description below. Other features, objects, and advantages will be apparent from the description and drawings, and from the claims.
FIG. 1A is perspective view illustrating an example wheel heat shield including a plurality of ribs.
FIG. 1B is a partial cross-sectional view of the wheel heat shield of FIG. 1A.
FIG. 2 is a partial cross-sectional view of an example wheel heat shield including a plurality of ribs having a tapered cross-section.
FIG. 3 is a partial cross-sectional view of an example wheel heat shield including a plurality of ribs having a curved cross-section.
FIG. 4 is perspective view illustrating an example wheel heat shield including a plurality of ribs extending along a longitudinal axis.
FIG. 5 is a partial perspective view illustrating an example wheel heat shield including a plurality of ribs extending along a longitudinal axis and having a curved rib portion.
FIG. 6 is a perspective view illustrating an example wheel heat shield including a plurality of ribs extending inclined to a longitudinal axis.
FIG. 7 is a perspective view illustrating an example wheel heat shield including a plurality of ribs having a chevron pattern.
FIG. 8 is a perspective view illustrating an example wheel including a plurality of rotor drive keys on an interior surface of the wheel.
FIG. 9 is a schematic cross-sectional view of an example wheel and brake assembly including the wheel of FIG. 8.
FIG. 10 is a block diagram illustrating an example system for additively manufacturing a wheel heat shield.
FIG. 11 is a flow diagram illustrating an example technique for forming a wheel heat shield.

### DETAILED DESCRIPTION

In general, the disclosure describes wheel heat shields, assemblies including wheel heat shields, and techniques for forming wheel heat shields. A wheel heat shield is positioned between a wheel and a heat-generating component (e.g., a brake assembly). The wheel heat shield is configured to resist heat generated by operation of the brake assembly (e.g., by frictional contact) from being transferred to the wheel. In some examples, the wheel heat shield may be positioned about a wheel cavity radially inward of a rim, and radially outward of the brake assembly. In some examples, a wheel heat shield includes at least one segment defining a plurality of ribs configured to resist heat transfer across the at least one segment. The plurality of ribs facilitate flow of air along the wheel heat shield and increase turbulent heat transfer, resisting transfer of heat from the heat-generating component across the wheel heat shield. Thus, the wheel heat shield positioned between the wheel and the heat-generating component resists heat transfer to the wheel. The plurality of ribs may be defined on a radially outer surface of the wheel heat shield. In some examples, a plurality of pedestals may space apart a radially inner surface from a radially outer surface of the wheel heat shield. The plurality of pedestals may provide mechanical support to space apart the radially inner surface from the radially outer surface, while defining passages between the radially inner surface and the radially outer surface, which may provide an insulative gap without requiring insulating material. Thus, the wheel heat shield may resist flow of heat generated by the brake assembly to the rim, or to a tire mounted on the rim.

Wheel heat shield manufacture may be complex and labor-intensive, for example, requiring alignment and placement of insulating material (e.g., fibers, batting, foam, fabric, or non-woven material) between shield walls, and coupling of inner and outer shield walls to form heat shield segments. In some examples according to the present disclosure, the wheel heat shield may not include insulating material in an interior of the wheel heat shield. For example, the plurality of ribs may draw air from outside of the wheel into the wheel, increasing cooling during rolling of the wheel. In some examples, the plurality of ribs may be configured to provide cooling (e.g., by drawing air axially through the wheel) regardless of the direction of the rotation of the wheel. Thus, the ribs may resist heat transfer from the brake assembly toward the wheel even when little to no insulating material is present in an interior of the wheel heat shield. Further, wheel heat shields according to the present disclosure may be fabricated in segments by additive manufacturing techniques, reducing the complexity of assembly, and reducing labor required to assemble components of wheel heat shields.

For example, using additive manufacturing to fabricate ribbed wheel heat shields may reduce costs and weight, because wheel heat shield segments or entire shields may be printed as unitary pieces, removing the need for metal work operations such as forming, welding, or riveting. Including the plurality of ribs along an exterior of the wheel heat shield and/or plurality of pedestals along an interior of the wheel heat shield may provide a better thermal shielding performance compared to heat shields that do not include ribs and/or pedestals. Moreover, the plurality of ribs may also strengthen the wheel heat shields.

Wheel heat shields according to the present disclosure may prevent or reduce transfer of heat from brake assemblies to wheels or tires, thus promoting structural integrity and performance of wheels and tires.

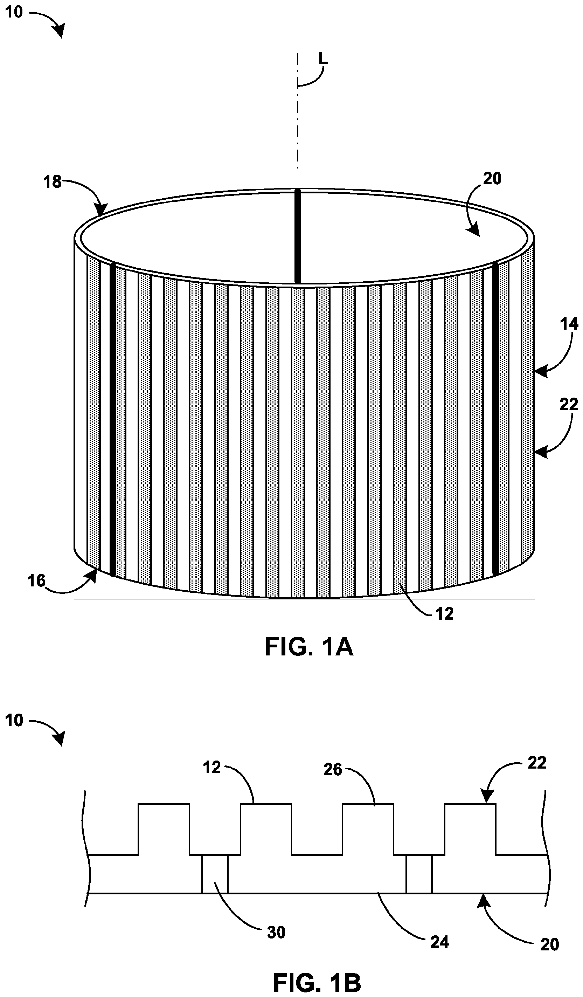

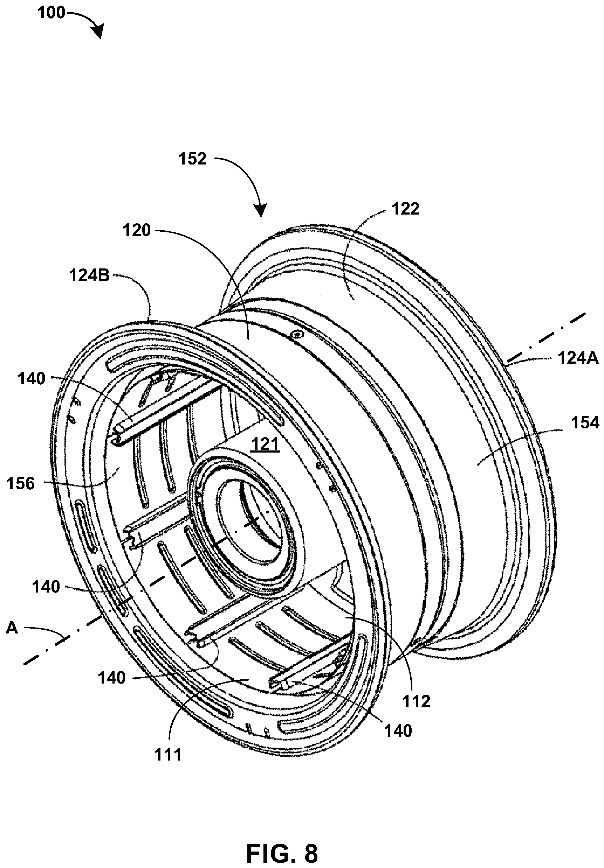

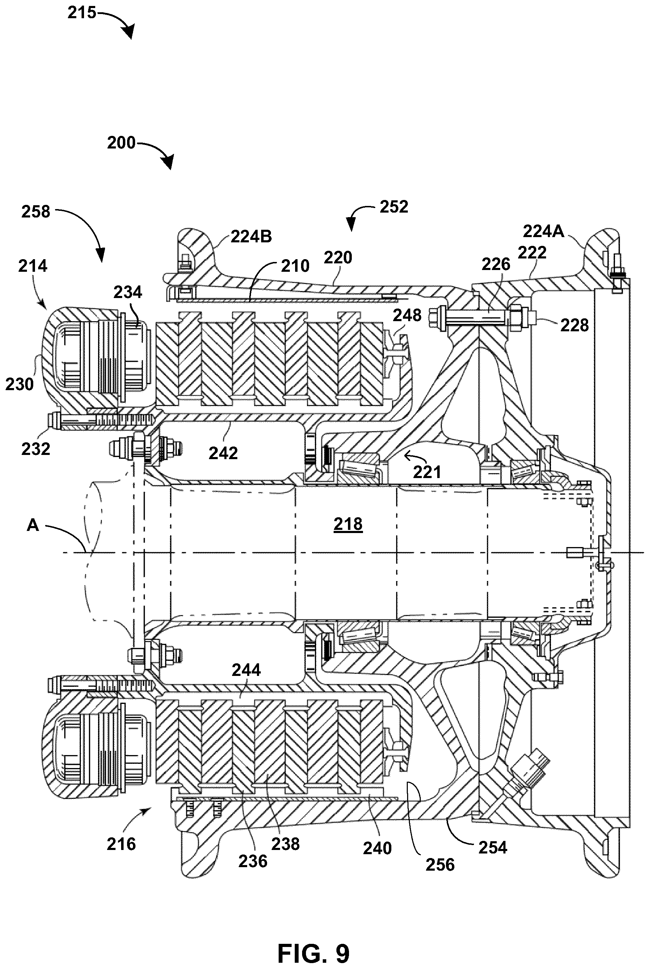

FIG. 1A is perspective view illustrating an example wheel heat shield 10 including a plurality of ribs 12. FIG. 1B is a partial cross-sectional view of wheel heat shield 10 of FIG. 1A. Wheel heat shield 10 is configured to be secured to a wheel assembly (for example, as described with reference to FIGS. 8 and 9), and to act as a thermal barrier between a wheel or a tire of the wheel assembly, and a heat-generating component, for example, a brake assembly. Plurality of ribs 12 facilitate dissipation of heat away from the wheel when wheel heat shield 10 is secured to the wheel assembly.

Wheel heat shield 10 includes at least one segment 14 including a heat-resistant material extending along a longitudinal axis L between an outboard end 16 and an inboard end 18. Wheel heat shield 10 may be configured to be secured to a wheel assembly, for example, with outboard end 16 pointing in an outboard direction relative to the wheel assembly, and with inboard end 18 pointing in an inboard direction relative to the wheel assembly. However, outboard end 16 may or may not extend substantially to or adjacent to an outboard end of the wheel assembly, and inboard end 18 may or may not extend substantially to or adjacent to an inboard end of the wheel assembly.

The heat-resistant material may include at least one of a metal or an alloy. In some examples, the heat-resistant material is additively deposited. For example, the heat-resistant material may include at least one of additively deposited metal or alloy. In some examples, the alloy includes a steel (e.g., stainless steel) or a titanium alloy. In some examples, the heat-resistant material includes at least one of alumina, zirconia, aluminum nitride, silicon carbide, or silicon nitride. The heat-resistant material may be sintered, for example, thermally sintered. In some examples, wheel heat shield 10 may include a preform configured to be thermally treated, for example, to remove a binder or a solvent, or to cause bonding, sintering, or diffusion of one or more component of the heat-resistant material.

In the example shown in FIG. 1A, wheel heat shield 10 includes three segments. However, in other examples, wheel heat shield 10 may include a single segment, two segments, or more than three segments. The segments may extend in a circumferential direction (relative to longitudinal axis L) along a circular path, a curved path, a line, or any suitable path. In some examples, each segment of wheel heat shield 10 extends along a circular arc, and wheel heat shield 10 is substantially cylindrical.

At least one segment 14 defines a radially inner surface 20 and a radially outer surface 22 relative to longitudinal axis L. At least radially outer surface 22 of at least one segment 14 defines the plurality of ribs 12 configured to resist heat transfer across at least one segment 14. For example, plurality of ribs 12 may be configured to promote flow of a cooling medium (for example, ambient air) along one or both of plurality of ribs 12 or along channels defined between neighboring ribs of plurality of ribs 12. Such flow of a cooling medium may absorb heat directed toward wheel heat shield 10, and divert the heat away from wheel heat shield 10.

At least one segment 14 may include a radially inner layer 24 defining radially inner surface 20 and a radially outer layer 26 defining radially outer surface 22. As seen in FIG. 1B, radially outer layer 26 (and thus, radially outer surface 22) is spaced from radially inner layer 24 (and thus, from radially inner surface 20). The spacing apart of radially inner surface 20 from radially outer surface 22 may reduce or prevent flow of heat in a radially outward direction (for example, from radially inner surface 20 toward radially outer surface 22).

While radially outer surface 22 may define plurality of ribs 12, in other examples, radially inner surface 20 may define plurality of ribs 12, instead of, or in addition to, radially outer surface 22. Thus, at least some ribs, or all ribs, or plurality of ribs 12, may be defined by radially inner surface 20 or radially outer surface 22.

Plurality of ribs 12 may include ribs having a homogeneous geometry or heterogenous geometry. For example, at least one rib of plurality of ribs 12 may differ from at least one other rib of plurality of ribs 12 in one or more of height (in a radial direction relative to longitudinal axis L), width (in a circumferential direction relative to longitudinal axis L), or inter-rib distance (in a circumferential direction relative to longitudinal axis L). In some examples, all ribs of plurality of ribs 12 are geometrically identical, accounting for manufacturing and measurement tolerances.

Plurality of ribs 12 may have any suitable average height, average width, or average inter-rib distance, relative to a maximum thickness of at least one segment 14. In some examples, the average height of ribs of plurality of ribs 12 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one segment 14. In some examples, the average height of ribs of plurality of ribs 12 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one segment 14.

In some examples, the average width of ribs of plurality of ribs 12 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one segment 14. In some examples, the average width of ribs of plurality of ribs 12 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one segment 14.

In some examples, the average inter-rib distance of ribs of plurality of ribs 12 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one segment 14. In some examples, the average inter-rib distance of ribs of plurality of ribs 12 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one segment 14.

In some examples, wheel heat shield further includes a plurality of pedestals 30. Plurality of pedestals 30 may extend between and space apart radially inner layer 24 and radially outer layer 26. Plurality of pedestals 30 may be distributed substantially uniformly along at least one of a first direction along longitudinal axis L or a second direction circumferential to longitudinal axis L. For example, plurality of pedestals 30 may be distributed in a grid, hexagonal array, or randomly distributed with a predetermined average inter-pedestal distance. In some examples, at least one pedestal of plurality of pedestals 30 defines a hollow pedestal interior. A hollow pedestal interior may promote thermal insulation, and may reduce flow of heat between radially inner layer 24 and radially outer layer 26 through plurality of pedestals 30 (for example, via conductive heat transfer). In some examples, a majority, or substantially all, of plurality of pedestals 30 define respective hollow pedestal interiors. However, in other examples, one, more than one, a majority of, or substantially all, of plurality of pedestals 30 may define solid pedestal interiors. In some examples, plurality of pedestals 30 integrally extends between radially inner layer 24 and radially outer layer 26, such that radially inner layer 24, radially outer layer 26, and plurality of pedestals 30 are unitary. While plurality of pedestals 30 has been described, in some examples, pedestals may be absent from a portion of or from an entirety of at least one segment 14.

In some examples, at least one segment 14 includes a unitary body. For example, each portion of at least one segment 14 is integral and continuous with other portions of at least one segment 14 (e.g., with plurality of pedestals 30).

Plurality of pedestals 30 may have any suitable pedestal geometry (for example, pedestal cross-sectional shape, average pedestal width, or average pedestal wall thickness). In some examples, the average inter-pedestal distance of plurality of pedestals 30 is at least 50%, at least 100%, at least 200%, at least 300%, at least 400%, at least 500%, or at least 1000%, of an average pedestal width. In some examples, the average inter-pedestal distance of plurality of plurality of pedestals 30 is less than or equal to 10,000%, less than or equal to 5,000%, or less than or equal to 1,000%, of the maximum thickness of the average pedestal width. The inter-pedestal distance may be sufficiently high to provide sufficient mechanical support to substantially uniformly space apart radially inner layer 24 from radially outer layer 26 of at least one segment 14, and sufficiently low to reduce heat transfer through plurality of pedestals 30.

In some examples, the average inter-pedestal distance of plurality of pedestals 30 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one segment 14. In some examples, the average inter-pedestal distance of plurality of pedestals 30 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one segment 14.

In some examples, the average pedestal width of plurality of pedestals 30 is at least 10%, at least 20%, at least 30%, at least 40%, at least 50%, at least 60%, at least 70%, at least 80%, at least 90%, at least 100%, at least 120%, at least 150%, or at least 200%, of the maximum thickness of at least one segment 14. In some examples, the average pedestal width of plurality of pedestals 30 is less than or equal to 200%, less than or equal to 150%, less than or equal to 100%, less than or equal to 90%, less than or equal to 80%, less than or equal to 70%, less than or equal to 60%, less than or equal to 50%, less than or equal to 40%, less than or equal to 30%, less than or equal to 20%, or less than or equal to 10%, of the maximum thickness of at least one segment 14.

At least one pedestal of plurality of pedestals 30 may define a circular, ellipsoidal, or polygonal cross-section. The cross-section of all pedestals of plurality of pedestals may be the same, or may differ in shape or dimensions. In some examples, substantially all pedestals of plurality of pedestals 30 respectively define a circular cross-section. In some examples, substantially all pedestals of plurality of pedestals 30 have the same pedestal width.

While plurality of ribs 12 may have right-angled surfaces as shown in FIG. 1B, in other examples, plurality of ribs may define inclined or curved surfaces. In some examples, at least one rib of plurality of ribs 12 defines a zig-zag, stepped, tapered, or curved cross-section transverse to longitudinal axis L. In some examples, all ribs of plurality of ribs 12 define the same cross-section. In other examples, at least two ribs differ in the shape or size of cross-section. At least one rib of plurality of ribs 14 may define a hollow rib interior or a solid rib interior. In some examples, each rib of plurality of ribs 14 is hollow. In other examples, each rib of plurality of ribs 14 is solid.

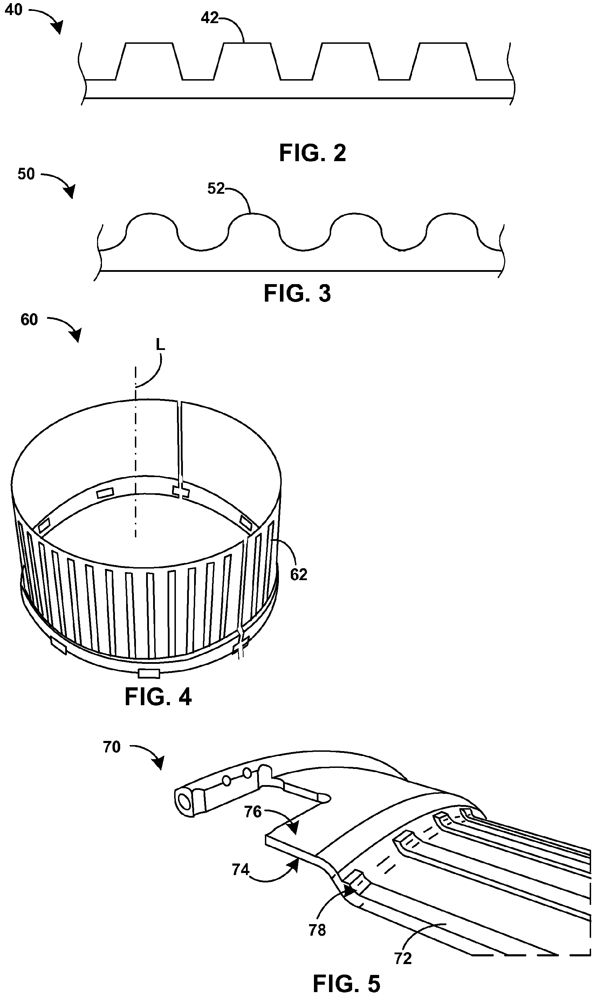

FIG. 2 is a partial cross-sectional view of an example wheel heat shield 40 including a plurality of ribs 42 having a tapered cross-section. For example, opposing walls of ribs 42 may be inclined relative to a radial direction.

FIG. 3 is a partial cross-sectional view of an example wheel heat shield 50 including a plurality of ribs 52 having a curved cross-section. The curved cross-section may include circular arcs, elliptical arcs, or any suitable curved path.

FIG. 4 is perspective view illustrating an example wheel heat shield 60 including a plurality of ribs 62 extending along a longitudinal axis L. Wheel heat shield 60 includes three segments, and the segments and ribs 62 may be similar to those described with reference to FIGS. 1A and 1B. For example, at least one rib (or all ribs) of plurality of ribs 62 extends in a direction substantially parallel to longitudinal axis L. Wheel heat shield 60 includes a radially inner layer 74 and a radially outer layer 76, and ribs 62 may be defined by radially outer layer 76.

FIG. 5 is a partial perspective view illustrating an example wheel heat shield 70 including a plurality of ribs 72 extending along a longitudinal axis and having a curved rib portion. Wheel heat shield 70 and ribs 72 are substantially similar to wheel heat shield 60 and ribs 62 described with reference to FIG. 4, but differ in the presence of curved rib portion 78. For example, at least one rib of the plurality of ribs 72 extends from a flat rib portion to curved rib portion 78. In some examples, curved rib portion 78 may extend toward an inboard direction.

While a wheel heat shield may include ribs extending parallel to a longitudinal axis (as described with reference to FIGS. 1A to 5), in other examples, the ribs may extend in other directions, or along non-linear, curved, spiral, or compound paths.

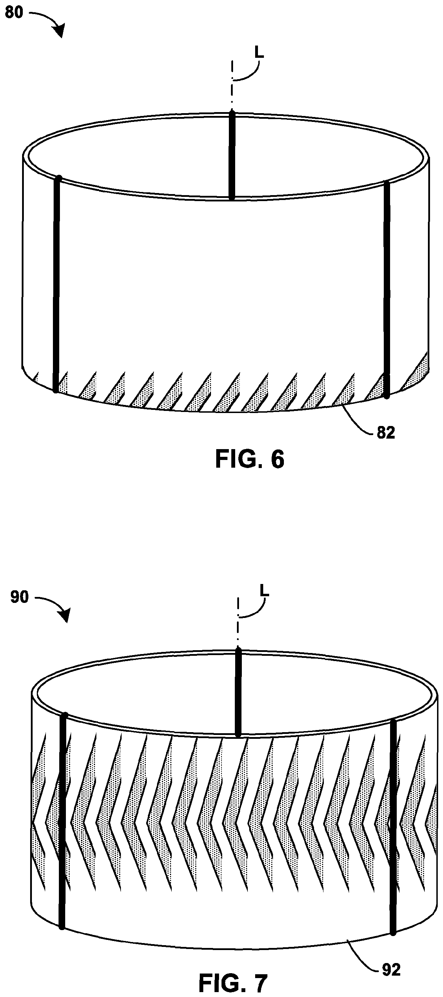

FIG. 6 is a perspective view illustrating an example wheel heat shield 80 including a plurality of ribs 82 extending in a direction inclined to longitudinal axis L. Wheel heat shield 80 and ribs 82 are substantially similar to wheel heat shield 10 and ribs 12 described with reference to FIGS. 1A and 1B, but differ in rib orientation. The minor angle of inclination relative to longitudinal axis L may have any suitable magnitude, for example, at least 10°, at least 20°, at least 30°, at least 45°, at least 60°, or at least 75°, relative to longitudinal axis L. In some examples, the minor angle of inclination relative to longitudinal axis L is less than or equal to 80°, less than or equal to 75°, less than or equal to 60°, less than or equal to 45°, or less than or equal to 30°, relative to longitudinal axis L.

FIG. 7 is a perspective view illustrating an example wheel heat shield 90 including a plurality of ribs 92 having a chevron pattern. Wheel heat shield 90 and ribs 92 are substantially similar to wheel heat shield 10 and ribs 12 described with reference to FIGS. 1A and 1B, but differ in rib orientation and pattern. At least one rib of plurality of ribs 92 defines at least one chevron, the at least one chevron defining an apex pointing in a circumferential direction (relative to longitudinal direction L). For example, each rib may define a single chevron having a single apex, or may define two or more chevrons, for example, alternating chevron patterns. The chevron may define any suitable apex angle, for example at least 30°, at least 45°, at least 60°, at least 75°, at least 90°, or at least 120°. In some examples, the apex angle is less than or equal to 150°, less than or equal to 120°, less than or equal to 90°, less than or equal to 60°, less than or equal to 45°, or less than or equal to 30°.

FIG. 8 is a perspective view of an example wheel 100 including a plurality of rotor drive keys 140 on an interior surface 156 of wheel 100. In some examples, wheel 100 is a part of an aircraft vehicle. In other examples, wheel 100 may be a part of any other vehicle, such as, for example, any marine vessel, land vehicle, or other vehicle. Wheel 100 may include a rim 152 defining an exterior surface 154 and interior surface 156. Rim 152 may include tubewell 120, wheel hub 121, and outboard tubewell 122. In some examples, interior surface 156 may include an inner diameter of tubewell 120. For example, in some cases, interior surface 156 may be referred to as an inner diameter surface of wheel 100.

In some examples, a tire (not shown) may be mounted on exterior surface 154 of rim 152. For example, wheel 100 may include an inboard bead seat 124B and an outboard bead seat 124A configured to retain a tire on exterior surface 154 of rim 152.

Wheel 100 is configured to engage with one or more rotors (not shown in FIG. 8) of a braking assembly. For example, as shown in the example of FIG. 8, a plurality of rotor drive keys 140 are attached to interior surface 156, and each rotor drive key of the plurality of rotor drive keys 140 may be configured to engage with one or more rotors of a brake disc stack of a braking assembly. An example braking assembly is described in more detail with respect to FIG. 9.

The plurality of rotor drive keys 140 extending in the substantially axial direction may enable wheel 100 to slide onto a braking assembly. For example, a plurality of rotors of a braking assembly may include drive slots configured to receive the plurality of rotor drive keys 140, enabling the plurality of rotor drive keys 140 to be slid into respective drive slots of the plurality of rotors. In other examples, one or more rotor drive keys of the plurality of rotor drive keys 140 may be oriented in a different direction and/or may engage with one or more rotors in a different manner.

As illustrated in the example of FIG. 8, in some examples, the plurality of rotor drive keys 140 may be mounted at substantially equal circumferential distances around interior surface 156 of wheel 100. In other examples, one or more of the plurality of rotor drive keys 140 may be mounted a different circumferential distance from an adjacent rotor drive than at least one other rotor drive key. Here and elsewhere, circumferential distance means the length of an arc on the interior surface 156 of wheel 100 where the arc is in a plane perpendicular to the substantially axial direction of wheel 100. Rotor drive keys 140 may be integrally formed with tubewell 120 or may be separate from and mechanically affixed to tubewell 120.

A wheel heat shield, for example, wheel heat shield 10, 40, 50, 60, 70, 80, or 90 described with reference to FIGS. 1A to 7, or any other wheel heat shield according to the disclosure, may be secured to wheel 100. In some examples, respective segments of wheel heat shield may be positioned between neighboring rotor drive keys of plurality of rotor drive keys 140.

FIG. 9 is a schematic cross-sectional view of an example wheel and brake assembly 215 including a wheel 200 and a braking assembly 258. Wheel and brake assembly 215 is shown and described to provide context to the example wheel heat shields described in the present disclosure. The wheel heat shields described in the present disclosure, however, may be used with any suitable wheel and brake assembly in other examples.

Wheel 200 includes tubewell 220, wheel hub 221, outboard tubewell 222, outboard bead seat 224A, and inboard bead seat 224B, rim 252, exterior surface 254, and interior surface 256, which may be configured individually and in relation to each other in the same manner as that discussed for the like-named components of wheel 100 (FIG. 8). Wheel 200 may be configured to be rotatably carried on axle 218. For example, wheel 200 may be rotatably carried on axle 218 by wheel hub 221. In turn, wheel 200 may impart motion to a vehicle including or mounted on the wheel and brake assembly 215. In the example shown in FIG. 9, tubewell 220 and outboard tubewell 222 are mechanically coupled by lug bolt 226 and lug nut 228. Other connection techniques may be used in other examples.

Braking assembly 258 includes an actuator assembly 214 and a brake stack 216. Actuator assembly 214 includes actuator housing 230, actuator housing bolt 232, and piston 234. Brake stack 216 includes a plurality of brake discs, which include interleaved rotor brake discs 236 and stator brake discs 238. Rotor brake discs 236 are configured to move relative to stator brake discs 238, e.g., rotationally about axis A and axially along axis A relative to stator brake discs 238. Rotor brake discs 236 engage with wheel 200, and in particular tubewell 220, by rotor drive keys 240. Stator brake discs 238 are mounted to torque tube 242 by splines 244. Wheel and brake assembly 215 may support any variety of private, commercial, or military aircraft or other type of vehicle.

Wheel and brake assembly 215 may be mounted to a vehicle via axle 218. Torque tube 242 supports actuator assembly 214 and stator brake discs 238. Axle 218 may be mounted on a strut of a landing gear (not shown) or other suitable component of the vehicle to connect wheel and braking assembly 215 to the vehicle.

During operation of the vehicle, braking may be necessary from time to time, such as during landing and taxiing procedures of an aircraft. Wheel and brake assembly 215 is configured to provide a braking function to the vehicle via actuator assembly 214 and brake stack 216. Actuator assembly 214 includes actuator housing 230 and piston 234. Actuator assembly 214 may include different types of actuators such as one or more of, e.g., an electrical-mechanical actuator, a hydraulic actuator, a pneumatic actuator, or the like. During operation, piston 234 may extend away from actuator housing 230 to axially compress brake stack 216 against compression region 248 for braking.

Rotor brake discs 236 are slidably engaged with rotor drive keys 240 for common rotation with tubewell 220 and rotor drive keys 240. Stator brake discs 238 are mounted to torque tube 242 by splines 244. In the example of FIG. 9, brake stack 216 includes four rotors and five stators. However, a different number of rotors and/or stators may be included in brake stack 216 in other examples. Rotor brake discs 236 and stator brake discs 238 may provide opposing friction surfaces for braking an aircraft. In some examples, wheel and brake assembly 215 may include a wheel heat shield 210 between rotor brake discs 236 and tubewell 220 in order to, for example, limit thermal transfer between brake stack 216 and wheel 200. Wheel heat shield 210 may include any wheel heat shield according to the present disclosure, for example, wheel heat shield 10, 40, 50, 60, 70, 80, or 90 described with reference to FIGS. 1A to 7.

In some examples, splines 244 may be circumferentially spaced about an outer portion of torque tube 242. Stator brake discs 238 may include a plurality of radially inwardly disposed lug notches along an inner diameter of the brake disc configured to engage with splines 244. Similarly, rotor brake discs 236 may include a plurality of radially inwardly disposed drive slots along an outer periphery (e.g., an outer diameter in the case of a disc having a circular cross-section) of the rotor brake disc. The drive slots may be configured to engage with rotor drive keys 240. As such, rotor brake discs 236 will rotate with the motion of wheel 200 while stator brake discs 238 remain stationary, allowing the friction surfaces of an adjacent stator brake disc 238 and rotor brake disc 236 to engage with one another to decelerate the rotation of wheel 200.

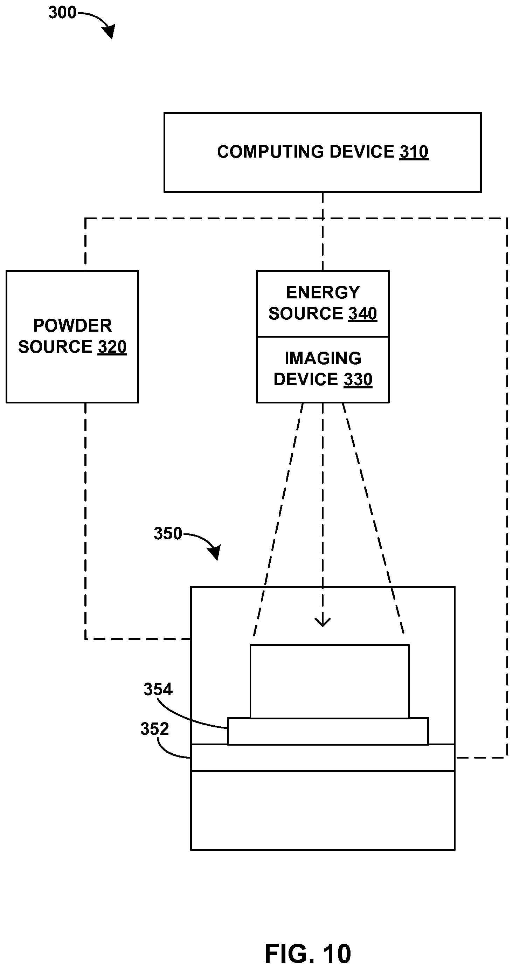

FIG. 10 is a block diagram illustrating an example system 300 for additively manufacturing a wheel heat shield. While system 300 is described as an example, wheel heat shields according to the present disclosure may be prepared using any other suitable systems. System 300 includes a computing device 310, a powder delivery device 320, an imaging device 330, an energy source 340, and a fabrication assembly 350.

Powder source 320 is configured to deliver a powder (or any other suitable form) of a heat-resistant material, for example, a metal or an alloy. The heat-resistant material may include a binder, for example, an organic or inorganic binder. Powder from powder source is transported to fabrication assembly 350, for example, over a platform 352. For example, powder source 320 may transfer powder via a roller, a wiper, or an arm to platform 352. Fabrication assembly 350 may include a build plate 354 configured to receive an initial layer of powder, and ultimately hold a component fabricated by deposition of powder. Imaging device 330 is configured to direct an energy beam (for example, a laser beam or an electron beam) from energy source 340 onto powder on build plate 354 based on a model, to form a layer of a plurality of layers.

Computing device 310 is configured to control components and operation of system 300 and may include, for example, a desktop computer, a laptop computer, a workstation, a server, a mainframe, a cloud computing system, or the like. Computing device 310 may be communicatively coupled to, and configured to control, powder source, imaging device 330, energy source 340, and fabrication assembly 350 using respective communication connections. System 300 may include one or more computing devices 310.

Computing device 310 is configured to control energy source 340, imaging device 330, and fabrication assembly 350 to selectively fuse powder, for example, by melting of powder or a binder component of the powder to form a patterned layer, based on the model. Computing device 310 may store the model in a memory of computing device 310. After a respective layer is formed, unfused powder may remain on build plate 354. The unfused powder may support subsequent layers. After each layer is completely formed, platform 352 is moved vertically, for example, away from the energy source, and additional powder deposited, so that the next layer may be formed via interaction of the energy beam and the powder. Ultimately, deposition of the entire plurality of layers results in formation of a component based on the model. Thus, system 300 may be used to fabricate a wheel heat shield according to the present disclosure based on a model of the wheel heat shield.

Computing device 310 may implement the techniques described in the present disclosure at least in part, in hardware, software, firmware, or any combination thereof. For example, computing device 310 may include one or more processors. Various aspects of the described techniques may be implemented within the one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of the present disclosure.

Such hardware, software, and firmware may be implemented within the same device (e.g., computing device 310) or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in the present disclosure may also be embodied or encoded in an article of manufacture including a computer-readable storage medium encoded with instructions. For example, computing device 310 may read the computer-readable storage medium and one or more processors of computing device 310 may execute the instructions. Instructions embedded or encoded in an article of manufacture including a computer-readable storage medium encoded, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, the computer-readable storage medium includes a non-transitory medium. The term "non-transitory" may indicate that the storage medium is not embodied in a carrier wave or a propagated signal. In certain examples, a non-transitory storage medium stores data that can, over time, change (e.g., in RAM or cache).

While wheel heat shields according to the present disclosure may be formed using powder bed additive systems, any other suitable additive manufacturing technique may be used, for example, bound powder extrusion, or non-powder based additive manufacturing techniques.

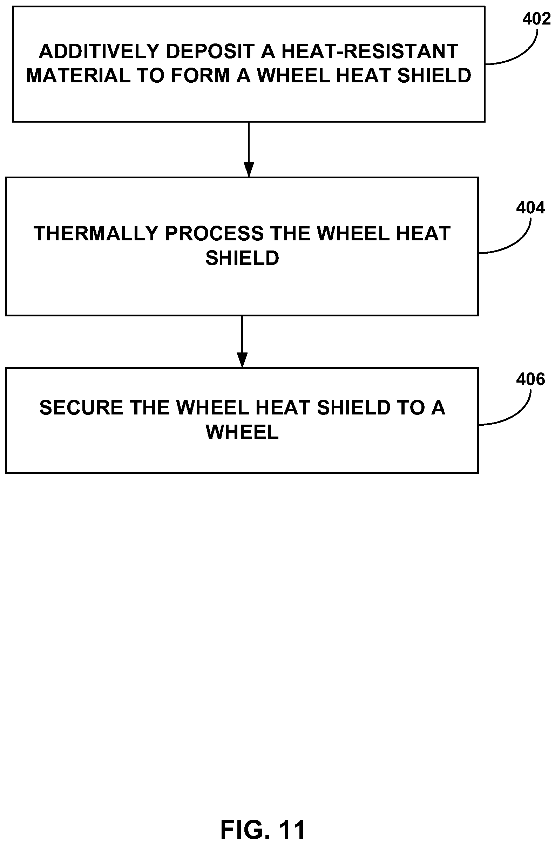

FIG. 11 is a flow diagram illustrating an example technique for forming a wheel heat shield. While techniques according to FIG. 11 are described with reference to wheel heat shield 10 of FIG. 1A formed using system 300 of FIG. 10, the techniques may be implemented using any suitable system to form any wheel heat shield according to the present disclosure. Further, any suitable technique may be used to form wheel heat shields according to the present disclosure.

The technique may include additively depositing a heat-resistant material to form wheel heat shield 10 (402). Wheel heat shield 10 includes at least one segment 14 including the heat-resistant material extending along longitudinal axis L between outboard end 16 and inboard end 18. At least one segment 14 defines radially inner surface 20 and radially outer surface 22. At least radially outer surface 22 of at least one segment 14 defines plurality of ribs 12 configured to resist heat transfer across at least one segment 14.

For example, the additively depositing (402) may include powder bed deposition of the heat-resistant material. In some examples, computing device 310 of system 300 may store the model corresponding to wheel heat shield 10 in the memory of computing device 310, and computing device 310 may control powder source 320, imaging device 330, energy source 340, and fabrication assembly 350 to fabricate wheel heat shield 10 on build plate 354 based on the model.

The technique may further include thermal processing of wheel heat shield 10 (404). For example, wheel heat shield 10 may be heated, tempered, sintered, or annealed. In some examples, the thermal processing may strengthen wheel heat shield 10.

In some examples, the technique may further include assembling a plurality of segments 14 into a single wheel heat shield. For example, multiple segments 14 may be joined by one or more of clips, pins, or fasteners to form an assembled wheel heat shield.

The technique may further include securing wheel heat shield 10 to an interior surface of a wheel (406). For example, the wheel may define a rim configured to receive a tire, as described with reference to FIGS. 8 and 9. In some examples, multiple segments 14 are individually secured to the wheel. In other examples, multiple segments 14 are joined to each other to form an assembled wheel heat shield, followed by securing the assembled wheel heat shield to the wheel.

After installation and/or use, wheel heat shield segments 14 may be removed and replaced from the wheel, for example, for maintenance or repair.

The following clauses illustrate example subject matter described herein.

Clause 1: A wheel heat shield including: at least one segment including a heat-resistant material extending along a longitudinal axis between an outboard end and an inboard end, the at least one segment defining a radially inner surface and a radially outer surface relative to the longitudinal axis, where at least the radially outer surface of the at least one segment defines a plurality of ribs configured to resist heat transfer across the at least one segment.

Clause 2: The wheel heat shield of clause 1, where the at least one segment includes a radially inner layer defining the radially inner surface and a radially outer layer defining the radially outer surface, the radially outer layer being spaced from the radially inner layer.

Clause 3: The wheel heat shield of clause 2, further including a plurality of pedestals extending between and spacing apart the radially inner layer and the radially outer layer.

Clause 4: The wheel heat shield of clause 3, where the plurality of pedestals is distributed substantially uniformly along at least one of a first direction along the longitudinal axis or a second direction circumferential to the longitudinal axis.

Clause 5: The wheel heat shield of clauses 3 or 4, where at least one pedestal of the plurality of pedestals defines a hollow pedestal interior.

Clause 6: The wheel heat shield of any of clauses 3 to 5, where at least one pedestal of the plurality of pedestals defines a circular, ellipsoidal, or polygonal cross-section.

Clause 7: The wheel heat shield of any clauses 1 to 6, where at least one rib of the plurality of ribs defines a zig-zag, tapered, stepped, or curved cross-section transverse to the longitudinal axis.

Clause 8: The wheel heat shield of any of clauses 1 to 7, where at least one rib of the plurality of ribs extends from a flat rib portion to a curved rib portion.

Clause 9: The wheel heat shield of any of clauses 1 to 8, where at least one rib of the plurality of ribs extends in a direction substantially parallel to the longitudinal axis.

Clause 10: The wheel heat shield of any of clauses 1 to 9, where at least one rib of the plurality of ribs extends in a direction inclined to the longitudinal axis.

Clause 11: The wheel heat shield of any of clauses 1 to 10, where at least one rib of the plurality of ribs defines at least one chevron, the at least one chevron defining an apex pointing in a circumferential direction.

Clause 12: The wheel heat shield of any of clauses 1 to 11, where the at least one segment includes a unitary body.

Clause 13: The wheel heat shield of any of clauses 1 to 12, where the heat-resistant material includes at least one of additively deposited metal or alloy.

Clause 14: an assembly including: a wheel defining an interior surface and an exterior rim configured to receive a tire; and a wheel heat shield secured to the interior surface, where the wheel heat shield includes at least one segment including a heat-resistant material extending along a longitudinal axis between an outboard end and an inboard end, the at least one segment defining a radially inner surface and a radially outer surface relative to the longitudinal axis, and where at least the radially outer surface of the at least one segment defines a plurality of ribs configured to resist heat transfer across the at least one segment.

Clause 15: The assembly of clause 14, further including a brake assembly, where the wheel heat shield is between the brake assembly and the interior surface.

Clause 16: The assembly of clauses 14 or 15, where the at least one segment of the wheel heat shield further includes: a radially inner layer defining the radially inner surface and a radially outer layer defining the radially outer surface; and a plurality of pedestals extending between and spacing apart the radially inner layer and the radially outer layer.

Clause 17: The assembly of any of clauses 14 to 16, where the heat-resistant material includes at least one of additively deposited metal or alloy.

Clause 18: A method including: additively depositing a heat-resistant material to form a wheel heat shield, where the wheel heat shield includes at least one segment including the heat-resistant material extending along a longitudinal axis between an outboard end and an inboard end, the at least one segment defining a radially inner surface and a radially outer surface relative to the longitudinal axis, and where at least the radially outer surface of the at least one segment defines a plurality of ribs configured to resist heat transfer across the at least one segment.

Clause 19: The method of clause 18, where the additively depositing includes powder bed deposition of the heat-resistant material.

Clause 20: The method of clauses 18 or 19, further including securing the wheel heat shield to an interior surface of a wheel, the wheel defining a rim configured to receive a tire.

Various examples have been described. These and other examples are within the scope of the following claims.

## Claims

1. A wheel heat shield comprising:
at least one segment comprising a heat-resistant material extending along a longitudinal axis between an outboard end and an inboard end, the at least one segment defining a radially inner surface and a radially outer surface,
wherein at least the radially outer surface of the at least one segment defines a plurality of ribs configured to resist heat transfer across the at least one segment.

2. The wheel heat shield of claim **1,** wherein the at least one segment comprises a radially inner layer defining the radially inner surface and a radially outer layer defining the radially outer surface, the radially outer layer being spaced from the radially inner layer.

3. The wheel heat shield of claim 2, further comprising a plurality of pedestals extending between and spacing apart the radially inner layer and the radially outer layer.

4. The wheel heat shield of claim 3, wherein the plurality of pedestals is distributed substantially uniformly along at least one of a first direction along the longitudinal axis or a second direction circumferential to the longitudinal axis.

5. The wheel heat shield of any one of claims 3 or 4, wherein at least one pedestal of the plurality of pedestals defines a hollow pedestal interior.

6. The wheel heat shield of any one of claims 3 to 5, wherein at least one pedestal of the plurality of pedestals defines a circular, ellipsoidal, or polygonal cross-section.

7. The wheel heat shield of any one of claims 1 to 6, wherein at least one rib of the plurality of ribs defines a zig-zag, stepped, tapered, or curved cross-section transverse to the longitudinal axis.

8. The wheel heat shield of any one of claims 1 to 7, wherein at least one rib of the plurality of ribs extends from a flat rib portion to a curved rib portion.

9. The wheel heat shield of any one of claims 1 to 8, wherein at least one rib of the plurality of ribs extends in a direction substantially parallel to the longitudinal axis.

10. The wheel heat shield of any one of claims 1 to 9, wherein at least one rib of the plurality of ribs extends in a direction inclined to the longitudinal axis.

11. The wheel heat shield of any one of claims 1 to 10, wherein at least one rib of the plurality of ribs defines at least one chevron, the at least one chevron defining an apex pointing in a circumferential direction.

12. The wheel heat shield of any one of claims 1 to 11, wherein the at least one segment comprises a unitary body.

13. The wheel heat shield of any one of claims 1 to 12, wherein the heat-resistant material comprises at least one of additively deposited metal or alloy.

14. An assembly comprising:
a wheel defining an interior surface and an exterior rim configured to receive a tire; and
the wheel heat shield of any one of claims 1 to 13 secured to the interior surface.

15. A method comprising:
additively depositing a heat-resistant material to form the wheel heat shield of any one of claims 1 to 13.
